Europäisches Patentamt

(19) European Patent Office

Office européen des brevets

(11) Numéro de publication : **0 130 118**
**B1**

(12) **FASCICULE DE BREVET EUROPÉEN**

(45) Date de publication du fascicule du brevet :
02.03.88

(51) Int. Cl.⁴ : **B 01 D 11/04**

(21) Numéro de dépôt : **84401263.3**

(22) Date de dépôt : **19.06.84**

(54) Perfectionnement aux échangeurs liquide-liquide et notamment aux colonnes d'extraction.

(30) Priorité : 22.06.83 FR 8310821

(43) Date de publication de la demande :
02.01.85 Bulletin 85/01

(45) Mention de la délivrance du brevet :
02.03.88 Bulletin 88/09

(84) Etats contractants désignés :
DE GB IT NL SE

(56) Documents cités :
FR-A- 2 103 460
GB-A- 532 402
GB-A- 702 545
GB-A- 901 610
US-A- 2 835 687
US-A- 3 620 959

(73) Titulaire : COMMISSARIAT A L'ENERGIE ATOMIQUE
31/33, rue de la Fédération
F-75015 Paris (FR)

(72) Inventeur : Bethuel, Louis
12, Hameau de la Croix d'Or
F-26700 Pierrelatte (FR)
Inventeur : Martin, Laurent
Les Isles - Allée B 3
F-07700 Bourg Saint Andeol (FR)
Inventeur : Dujardin, Thierry
Les Gagières - Cidex 503 B
F-38330 Saint Ismier (FR)

(74) Mandataire : Mongrédien, André et al
c/o BREVATOME 25, rue de Ponthieu
F-75008 Paris (FR)

## Description

La présente invention a pour objet un perfectionnement aux échangeurs liquide-liquide, notamment aux colonnes d'extraction, du genre de ceux dans lesquels circule une phase dispersée dans une phase continue à contre-courant.

Elle fait appel aux techniques connues des décanteurs électrostatiques pour la séparation des émulsions, c'est-à-dire de décanteurs pourvus d'électrodes qui créent un champ électrique assurant la coalescence des gouttes de l'émulsion. Ces appareils ont reçu de nombreuses applications pour la séparation eau dans huile.

Le brevet américain 4 161 439 propose un échangeur liquide-liquide multi-étages, comportant, régulièrement réparties, des zones de dispersion et d'électrocoalescence ; c'est-à-dire des zones dans lesquelles sont créés des champs électriques assurant respectivement la dispersion et la coalescence des gouttes de la phase dispersée.

L'échangeur décrit dans ce brevet comporte une colonne unique dans laquelle est située, dans sa partie active, une pluralité d'électrocoalesceurs et ne recherche pas une séparation efficace de deux liquides en sortie de colonne, afin de pouvoir associer plusieurs colonnes d'échange en série.

On sait que les échangeurs liquide-liquide ayant une phase dispersée dans une phase continue ont des performances d'autant plus élevées qu'ils possèdent une aire interfaciale spécifique de contact entre les deux phases plus grande. Il est nécessaire qu'ils fonctionnent avec un taux de rétention élevé qui, malheureusement, peut se traduire par un entraînement non négligeable de la phase dispersée dans la phase continue sortant de l'échangeur.

Le perfectionnement selon la présente invention, de conception simple et d'une grande efficacité permet d'arrêter l'entraînement des fines gouttelettes de la phase dispersée et assurer ainsi son recyclage dans l'échangeur. Plus précisément la présente invention consiste en un échangeur liquide-liquide caractérisé en ce qu'il comprend un électrocoalesceur placé dans la partie de l'échangeur située entre l'entrée de la phase dispersée et la sortie de la phase continue, et un moyen de mesure du taux de rétention de la phase dispersée dans la partie de l'échangeur située entre l'entrée de la phase dispersée et l'électrocoalesceur.

L'électrocoalesceur selon la présente invention comporte au moins deux électrodes dont une, placée au voisinage de l'entrée de la phase dispersée, est reliée à la terre tandis que l'autre est sous tension.

Le champ électrique généré par l'électrocoalesceur placé, selon l'invention, dans cette partie de l'échangeur permet d'arrêter l'ensemble des fines grâce au contre-courant des phases et leur circulation par rapport aux électrodes. Cela se traduit, au voisinage d'une électrode de l'électrocoalesceur d'une zone de rétention élevée (80 % par exemple) qui se comporte comme un milieu poreux ; les gouttes de la phase dispersée qui ont grossi sous l'action du champ électrique piègent les fines qui pourraient être entraînées par la phase continue. La dimension des gouttes continue donc à croître au cœur de cette zone jusqu'à ce que leur taille leur permette de se déplacer à nouveau à contre-courant de la phase continue et de rejoindre ainsi la partie active de l'échangeur.

Il est ainsi possible de faire fonctionner l'échangeur très près de l'engorgement sans entraînement important de la phase dispersée. Cela permet d'augmenter le taux moyen de rétention ainsi que les débits des deux phases. Puisqu'il ne se produit pratiquement pas d'entraînement de la phase dispersée par la phase continue, le perfectionnement de l'invention permet donc d'associer plusieurs échangeurs lorsque les entraînements à la sortie de l'un, sont susceptibles d'altérer la bonne marche du suivant.

En outre l'échangeur selon l'invention fonctionne avec une faible intensité de champ, la forte densité des gouttes rendant l'électrocoalescence intense même en champ faible.

Selon l'invention la phase continue ne doit pas être trop conductrice, car il est nécessaire d'entretenir un champ électrique au moins égal à quelques volts/centimètre.

De façon préférentielle l'échangeur selon l'invention se présente sous la forme d'une colonne (à pulvérisation, pulsée, Kühni...).

L'emplacement de l'électrocoalesceur dans la colonne est fonction des liquides traités.

Ainsi si la phase continue est la plus légère, l'électrocoalesceur se place en tête de colonne, alors qu'il est situé en pied de colonne lorsque c'est la phase dispersée qui est moins dense.

Selon une réalisation préférentielle de l'invention l'électrocoalesceur comporte deux électrodes reliées à la terre entourant une électrode sous tension.

Le moyen de mesure du taux de rétention est déterminé en fonction des phases en présence (mesure de la pression, mesure de conductivité du mélange diphasique).

Ce moyen de mesure permet de déterminer de manière sensible la proximité de l'engorgement et d'asservir de façon très stable la marche de la colonne en agissant sur les paramètres de son fonctionnement (débits, amplitude ou fréquence du pulseur, tension interélectrodes...).

Les figures schématiques jointes permettront de mieux comprendre l'invention. Elles sont données bien entendu à titre illustratif mais non limitatif de l'invention.

La figure 1 représente, en coupe, une colonne d'échange comportant un moyen de mesure du taux de rétention de la phase dispersée permettant le pilotage de la colonne d'échange.

La figure 2 décrit une variante de l'électrocoalesceur de la figure 1.

La figure 3 montre, en coupe, une autre variante de l'électrocoalesceur de la figure 1.

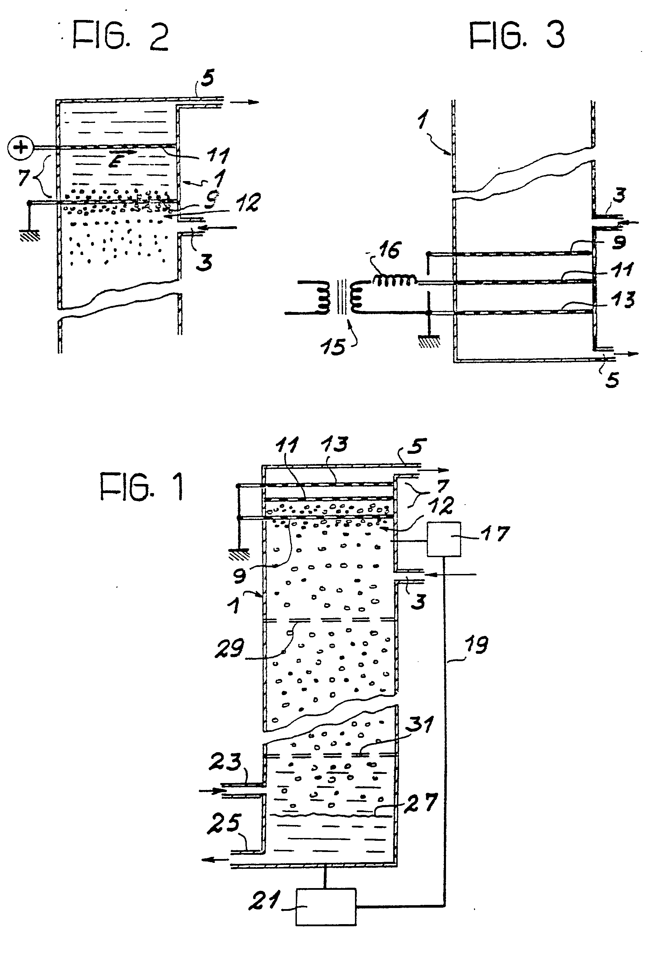

Dans les figures 2 et 3 la représentation du moyen de mesure du taux de rétention de la phase dispersée a été omise.

On a représenté sur la figure 1 une colonne d'échange liquide-liquide 1 dans laquelle circule, à contre-courant, une phase continue légère et une phase dispersée plus dense.

Conformément à l'invention on a disposé, entre l'entrée 3 de la phase dispersée et la sortie 5 de la phase continue, un électrocoalesceur 7 constitué de trois électrodes se présentant sous forme de plaques de graphite perforées. Ces trois électrodes 9, 11 et 13, placées perpendiculairement à l'axe de la colonne, créent un champ électrique $\hat{E}$ à l'intérieur de la colonne. Les électrodes 9 et 13 sont reliées à la terre, tandis que l'autre électrode 11 est sous tension.

En fonctionnement les gouttelettes entraînées par la phase continue coalescent sous l'action du champ électrique, s'accumulent au voisinage de l'électrode 9 et produisent ainsi une zone 12 à taux de rétention élevée qui piège les gouttelettes plus fines. Ceci a pour effet d'accroître leur taille et, lorsqu'elles atteignent une grosseur suffisante, elles redescendent dans la colonne à contre-courant de la phase continue.

La colonne 1 comporte aussi un moyen de mesure 17 placé entre l'entrée de la phase dispersée 3 et l'électrocoalesceur 7 constitué de trois électrodes 9, 11 et 13.

Dans cet exemple le moyen de mesure 17 contrôle la pression au niveau du lit dense 12 situé entre l'électrode 9 et l'entrée de la phase dispersée 3.

Une petite variation du taux de rétention moyen dans la colonne provoque une variation beaucoup plus grande du taux de rétention du lit dense 12. Cet effet amplificateur, contrôlé par le moyen de mesure 17, permet l'asservissement du dispositif d'agitation de phases. Dans cet exemple le moyen de mesure 17 agit, par la liaison 19, sur le pulseur 21 placé en pied de colonne. La fréquence ou l'amplitude des pulsations est alors corrigée en fonction du taux de rétention moyen de la colonne d'échange.

En fonctionnement la phase continue pénètre dans la colonne 1 par la canalisation 23 et en sort par le conduit 5, tandis que la phase dispersée entre par 3 dans la colonne d'échange et en sort par 25. On aperçoit, en 27, l'interface du pied de colonne. En 29 et 31 on a représenté respectivement le premier et le dernier tableaux de la colonne d'échange.

Durant l'échange une augmentation du taux de rétention du lit dense 12 signifie que la colonne 1 reçoit trop de phase dispersée, cela se traduit, grâce à la chaîne 17 et 19, par une diminution des pulsations du pulseur 21 (amplitude ou fréquence).

Dans le cas contraire, si le taux de rétention du lit dense 12 diminue, le moyen de mesure 17 enregistre cette variation et laisse pénétrer plus de phase dispersée dans la colonne tandis que les pulsations du pulseur 21 augmentent.

Sur la figure 2, on a représenté une variante de réalisation de l'électrocoalesceur de la figure 1.

Ainsi, on a représenté sur la figure 2 la tête de la colonne d'échange liquide-liquide 1 dans laquelle circule, à contre-courant, une phase continue légère et une phase dispersée plus dense.

On a disposé, entre l'entrée 3 de la phase dispersée et la sortie 5 de la phase continue, un électrocoalesceur 7 constitué de deux électrodes se présentant sous forme de plaques de graphite perforées. Ces deux électrodes 9 et 11 placées perpendiculairement à l'axe de la colonne, créent un champ électrique E à l'intérieur de la colonne. L'électrode 9 est reliée à la terre, tandis que l'autre électrode 11 est sous tension.

Sur la figure 3 on reconnaît la colonne d'échange 1 à l'intérieur de laquelle sont disposées deux électrodes auxquelles s'ajoutent un système de remise à la terre. Dans cet exemple on suppose que la phase continue est la plus dense, c'est-à-dire que son évacuation se fait par l'extrémité inférieure de la colonne d'échange 1.

La phase dispersée entre dans la colonne 1 par le conduit 3. La phase continue sort par la conduite 5. Les électrodes 9 et 11 sont disposées en deçà de l'arrivée de la phase dispersée. Elles occupent deux sections horizontales distantes de 1 à 50 cm, de préférence 10 à 15 cm et permettent le passage des phases. Elles sont constituées de plaques de graphite perforées. La taille des orifices ne doit donc pas être trop grande afin d'éviter qu'un filet de phase dispersée, lorsque celle-ci est bonne conductrice de l'électricité ne traverse l'électrode 9 sans la toucher et mette ainsi l'ensemble de l'émulsion de la colonne sous tension. Dans l'exemple décrit ici les perforations des électrodes ont un diamètre inférieur au vingtième du diamètre de la colonne, la transparence des électrodes étant de l'ordre de 40 %.

L'électrode 11 est polarisée grâce au transformateur 15. L'électrode 9 la plus rapprochée de l'entrée de la phase dispersée est reliée à la terre comme montré sur cette figure.

La remise à la terre de la phase continue après passage dans l'électrocoalesceur s'effectue en plaçant une électrode 13 reliée à la terre. La zone de la colonne comprise entre les deux électrodes de terre 9 et 13 doit être isolée de l'extérieur.

La tension efficace d'alimentation est comprise entre quelques volts et 380 volts. L'appareil maintient un taux d'entraînement inférieur à 1 % à partir d'un champ de quelques volts/centimètre, qui peut être continu, alternatif, ou sous forme d'impulsions périodiques.

En fonctionnement normal, le lit de gouttelettes se trouve près de l'électrode voisine de l'entrée de la phase dispersée. La puissance consommée P est égale à :

$P = \Delta V^2/\rho \times d$  W/m² de section droite de la colonne
$\Delta V$ ddp interélectrodes (V)
d distance interélectrodes (m)
$\rho$ résistivité de la phase continue $(\Omega \cdot m)^{-1}$

elle est en général très faible.

Il peut se produire une remontée accidentelle du lit de gouttes qui vient au contact de l'électrode sous tension. Sa conductivité est proche de celle de la phase dispersée, souvent très conductrice. Il n'est alors plus possible d'appliquer la tension normale de fonctionnement. Plutôt que d'annuler cette tension, il est préférable, afin de rendre sa restauration ultérieure automatique, d'adopter un système générateur de tension présentant une caractéristique tension-courant qui décroît rapidement, tout en maintenant une faible tension, inférieure à 50 V. On introduit pour cela dans le circuit un moyen connu en soi tel qu'un système électronique approprié, ou bien une résistance, ou, en courant alternatif, une bobine d'induction 16, ou encore on emploie un transformateur saturable. Un autre moyen consiste à recouvrir les électrodes d'un revêtement idoine, en matériau isolant, qui empêche tout court-circuit par l'intermédiaire des gouttes de phase dispersée, et ne diminue pas l'intensité du champ entre les électrodes en régime normal.

Il faut ensuite agir sur la marche de la colonne pour provoquer un abaissement du lit de gouttes et le rétablissement de la tension nominale.

Les échangeurs liquide-liquide conformes à l'invention peuvent s'appliquer à l'hydrométallurgie, notamment à la séparation des terres rares, grâce à la possibilité d'associer une batterie de colonnes d'échange en série sans transfert de phase dispersée d'une colonne dans l'autre. Ils peuvent également s'appliquer à la séparation isotopique de l'uranium par échange chimique.

En effet le fonctionnement de chacune a un taux de rétention moyen de 20 à 30 % plus grand en maintenant un taux d'entraînement inférieur à 1 ‰.

De même on a utilisé, dans la description des figures, des plaques en graphite. Bien évidemment les électrodes pourraient être réalisées en matériaux métalliques conducteurs (grilles, tissus, barreaux), en polymères conducteurs, ou en matériau conducteur recouvert d'isolant.

**Revendications**

1. Echangeur liquide-liquide du genre de ceux dans lesquels circule une phase dispersée dans une phase continue, caractérisé en ce qu'il comprend un électrocoalesceur (7) placé dans la partie de l'échangeur située entre l'entrée (3) de la phase dispersée et la sortie (5) de la phase continue, et un moyen de mesure (17) du taux de rétention de la phase dispersée dans la partie de l'échangeur située entre l'entrée de la phase dispersée (3) et l'électrocoalesceur (7).

2. Echangeur liquide-liquide selon la revendication 1, caractérisé en ce que l'électrocoalesceur (7) comporte au moins deux électrodes dont une (9), placée au voisinage de l'entrée de la phase dispersée (3) est reliée à la terre tandis que l'autre (11) est sous tension.

3. Echangeur liquide-liquide selon la revendication 2, caractérisé en ce que l'électrocoalesceur (7) comporte deux électrodes (9 et 13) reliées à la terre, entourant une électrode sous tension (11).

4. Echangeur liquide-liquide selon l'une quelconque des revendications 1 à 3, caractérisé en ce que le moyen de mesure (17) détermine la pression.

5. Echangeur liquide-liquide selon l'une quelconque des revendications 1 à 3, caractérisé en ce que le moyen de mesure (17) détermine la conductivité du mélange diphasique.

6. Echangeur liquide-liquide selon l'une quelconque des revendications 1 à 5, caractérisé en ce qu'il est constitué par au moins une colonne pulsée.

7. Echangeur liquide-liquide selon l'une quelconque des revendications 1 à 5, caractérisé en ce qu'il est constitué par au moins une colonne à pulvérisation.

8. Application de l'échangeur selon l'une quelconque des revendications 1 à 7 à la séparation de isotopes de l'uranium par échange chimique.

**Claims**

1. Liquid-liquid exchanger of the type in which a disperse phase circulates in a continuous phase, characterized in that it comprises an electrocoalescer (7) placed in that part of the exchanger located between the dispersed phase inlet (3) and the continuous phase outlet (5) and a means (17) for measuring the retention level of the dispersed phase in that part of the exchanger located between the dispersed phase inlet (3) and the electrocoalescer (7).

2. Liquid-liquid exchanger according to claim 1, characterized in that the electrocoalescer (7) comprises at least two electrodes, whereof one (9), placed in the vicinity of the dispersed phase inlet (3) is connected to earth, whilst the other (11) is live.

3. Liquid-liquid exchanger according to claim 2, characterized in that the electrocoalescer (7) comprises two electrodes (9 and 13) connected to earth surrounding a live electrode (11).

4. Liquid-liquid exchanger according to any one of the claims 1 to 3, characterized in that the measuring means (17) determines the pressure.

5. Liquid-liquid exchanger according to any one of the claims 1 to 3, characterized in that the measuring means (17) determines the conductivity of the two-phase mixture.

6. Liquid-liquid exchanger according to any one of the claims 1 to 5, characterized in that it is constituted by at least one pulsed column.

7. Liquid-liquid exchanger according to any one of the claims 1 to 5, characterized in that it is constituted by at least one spraying column.

8. Application of the exchanger according to any one of the claims 1 to 7 to the separation of uranium isotopes by chemical exchange.

**Patentansprüche**

1. Flüssig-Flüssig-Austauscher von der Art, in der eine in einer zusammenhängenden Phase dispergierte Phase umläuft, dadurch gekennzeichnet, daß er einen Elektrocoalescer (7), der in dem Teil des Austauschers angeordnet ist, der zwischen dem Eingang (3) der dispergierten Phase und dem Ausgang (5) der zusammenhängenden Phase liegt, und eine Meßeinrichtung (17) für den Rückhalteanteil der dispergierten Phase in dem Teil des Tauschers, der zwischen dem Eingang der dispergierten Phase und dem Elektrocoalescer (7) liegt, enthält.

2. Flüssig-Flüssig-Austauscher nach Anspruch 1, dadurch gekennzeichnet, daß der Elektrocoalescer (7) wenigstens zwei Elektroden enthält, von denen eine (9), die benachbart zum Eingang der dispergierten Phase (3) angeordnet ist, mit Erde verbunden ist, während die andere (11) unter Spannung steht.

3. Flüssig-Flüssig-Austauscher nach Anspruch 2, dadurch gekennzeichnet, daß der Elektrocoalescer zwei Elektroden (9 und 13) enthält, die mit Erde verbunden sind und die unter Spannung stehende Elektrode (11) umgeben.

4. Flüssig-Flüssig-Austauscher nach einem der Ansprüche 1 bis 3, dadurch gekennzeichnet, daß die Meßeinrichtung (17) den Druck ermittelt.

5. Flüssig-Flüssig-Austauscher nach einem der Ansprüche 1 bis 3, dadurch gekennzeichnet, daß die Meßeinrichtung (17) die Leitfähigkeit der zweiphasigen Mischung ermittelt.

6. Flüssig-Flüssig-Austauscher nach einem der Ansprüche 1 bis 5, dadurch gekennzeichnet, daß er von wenigstens einer pulsierenden Säule gebildet wird.

7. Flüssig-Flüssig-Austauscher nach einem der Ansprüche 1 bis 5, dadurch gekennzeichnet, daß er von wenigstens einer Zerstäubersäule gebildet ist.

8. Anwendung des Austauschers nach einem der Ansprüche 1 bis 7 auf die Trennung von Uranisotopen durch chemischen Austausch.

# FIG. 2

# FIG. 3

# FIG. 1